# EUROPÄISCHE PATENTSCHRIFT

(11) **EP 2 748 565 B1**
(45) Veröffentlichungstag und Bekanntmachung des Hinweises auf die Patenterteilung: **16.08.2017**
(21) Anmeldenummer: 12756672.7
(22) Anmeldetag: 21.08.2012
(51) Int. Cl.: G01F 1/42, G01F 13/00

(54) **DURCHFLUSSSENSOR**
FLOW SENSOR
DÉBITMÈTRE

(30) Priorität: 26.08.2011 CH 13982011; 03.11.2011 CH 17852011
(43) Veröffentlichungstag der Anmeldung: 02.07.2014
(73) Patentinhaber: Reseachem GmbH, 3400 Burgdorf (CH)
(72) Erfinder: BERGER, Stefan, CH-3400 Burgdorf (CH); ZUMBRUNNEN, Simon, CH-3018 Bern (CH); MARMET, Philip, CH-3048 Worblaufen (CH); HASLEBACHER, Philipp, CH-3400 Burgdorf (CH); SCHÄR, Manfred, CH-3400 Burgdorf (CH)
(74) Vertreter: Rentsch Partner AG
(86) Internationale Anmeldenummer: PCT/EP2012/066227
(87) Internationale Veröffentlichungsnummer: WO 2013/030034

(56) Entgegenhaltungen:
- EP-A1- 0 166 502
- EP-A2- 0 337 092
- DE-C1- 19 650 115
- US-B1- 6 463 810

## Beschreibung

### TECHNISCHES GEBIET

Die Erfindung betrifft Durchflusssensoren mit mindestens drei hintereinander angeordneten Messkammern, die jeweils durch einen Strömungswiderstand fliessend miteinander verbunden sind, wobei mindestens zwei der Strömungswiderstände einen unterschiedlichen Druckverlustbeiwert aufweisen. Die Erfindung betrifft weiter Dosiervorrichtungen mit solchen Durchflusssensoren, sowie Verfahren zur Bestimmung eines Volumenstroms und/oder einer Viskosität eines Fluids mit solchen Durchflusssensoren.

### STAND DER TECHNIK

Bei der Kultivierung von Mikroorganismen ist es wichtig, Nährmedien exakt und mit bestimmten Dosierraten dem Reaktionsgefäss zuzuführen. Für grössere Bioreaktoren (> 500 L, Dosierrate > 1 kg/h) werden dazu Dosierpumpen oder Waagen verwendet.

In der internationalen Anmeldung Nr. PCT/EP2011/052545 der Anmelderin ist ein vorteilhaftes Dosiersystem zur Zudosierung von Fluiden in Reaktionsgefässe beschrieben. Der Inhalt der genannten Anmeldung soll hiermit durch Referenz als Bestandteil dieser Beschreibungsunterlagen gelten. Bei dem genannten Dosiersystem erfolgt die Zudosierung in Reaktionsgefässe tropfenweise mit Hilfe einer geeigneten Dosiervorrichtung, bspw. einem elektromagnetisch angesteuerten Präzisionsventil. Die geforderte Dosiergenauigkeit wird dadurch erreicht, dass der Differenzdruck über der Dosiereinheit sehr genau geregelt wird, indem zusätzlich über ein Dosierratenbestimmungsmittel wie eine Waage oder ein Durchflusssensor die tatsächliche Dosierrate überwacht und entsprechend der Differenzdruck nachgeregelt wird. Die sehr genaue Regelung des Differenzdrucks ist unter anderem notwendig, weil die bei einer bestimmten Öffnungsdauer des Ventils und einem bestimmten Fluiddruck resultierende Tropfengrösse von der Viskosität des Fluids abhängig ist, und damit auch von der Temperatur.

Weiter sind bei diesem Dosiersystem die Dosiervorrichtung und das Dosierratenbestimmungsmittel separat und nicht zwingend in räumlich konstanter Position zueinander angeordnet sind, was durch die resultierenden undefinierten hydrostatischen Druckunterschiede die Differenzdruckregelung beeinflusst. Um über längere Zeiträume exakte Dosierraten sicherzustellen, müssen diese Effekte gegebenenfalls berücksichtigt werden. Dies führt zu einer komplexen Regelung.

Ein aus dem Stand der Technik bekannter Durchflusssensor zur Messung von kleinen Durchflussraten im Mikroliterbereich ist beispielsweise der sog. MEMS Durchflusssensor der Fa. Seyonic, CH-2000 Neuchätel, Schweiz. Dieser Durchflusssensor wird in Pipetiersystemen eingesetzt und umfasst einen Messkanal, einen piezoresistiven Drucksensor und einen Temperatursensor. Der Nachteil an diesem Durchflusssensor ist, dass die gemessenen Durchflussraten aufgrund von dynamischen Viskositätseinflüssen abhängig von der Temperatur sind und zusätzlich zum Durchfluss auch die Temperatur respektive die Viskosität des zu messenden Fluids berücksichtigt werden muss. Es ist entsprechend notwendig, den Durchflusssensor vor der Messung zu kalibrieren.

In der Dissertation "Durchflusssensoren aus Kunststoff für sehr kleine Volumenströme auf Basis des AMANDA-Verfahrens" von von Dipl. Ing. Dirk Maria Dittmann, Forschungszentrum Karlsruhe GmbH, Karlsruhe, 2002, wird ein temperaturunabhängiger Durchflusssensor vorgestellt. Bei diesem Durchflusssensor werden zwei Messkammern hintereinander geschaltet, wobei in jeder der beiden Messkammern eine elastische Membran angeordnet ist, die ein Mittelloch aufweist. Die beiden hintereinander angeordneten Membranen sind beweglich in der Messkammer angeordnet, unterschiedlich dick und fungieren als Strömungswiderstände. Der zu messende Fluidvolumenstrom tritt in die erste Messkammer, passiert das Mittelloch der ersten Membran, tritt über in die zweite Messkammer und passiert das Mittelloch der zweiten Membran. Der Druckverlust über jede Membran wird ermittelt, indem die Dehnung der Membran elektronisch gemessen und aus dieser Dehnung der Druckunterschied bestimmt wird. Der Einfluss, den die erste Membran beim Durchströmen der Flüssigkeit auf die zweite Membran ausübt, wird nicht berücksichtigt. Die Druckverlustbeiwerte ζ1 und ζ2 für die Strömung durch die Membranöffnungen werden gleichgesetzt. Durch das Hintereinanderschalten der beiden Membranen, die als Strömungswiderstände dienen, soll der Fluidvolumenstrom unabhängig von der Viskosität, und damit unabhängig von der Temperatur gemessen werden können. Die Ableitung der theoretischen Formel für den Zusammenhang der temperaturunabhängigen Durchflussmessung ist in der vorgängig erwähnten Dissertation, ab S. 26 erläutert. Der Inhalt dieses Dokuments soll hiermit durch Referenz als Bestandteil dieser Beschreibungsunterlagen gelten.

In der Dissertation "Durchflussmessung kleinster Flüssigkeitsmengen" von Dipl. Ing. Götz Schnell, Darmstadt, 1995, wurden verschiedene Messverfahren zur Anwendbarkeit bei der Messung des Durchflusses kleinster Flüssigkeitsmengen untersucht. In Kapitel 8.4 der Dissertation "Durchflussmessung durch Messen des Druckabfalls in geraden Rohren" wird die Herleitung der theoretischen Formel für den Druckverlust über einen kanalförmigen Strömungswiderstand dargestellt. Der Inhalt dieses Kapitels soll hiermit durch Referenz als Bestandteil dieser Beschreibungsunterlagen gelten. In der Dissertation werden verschiedene Lösungsmöglichkeiten diskutiert, um den Einfluss, den eine Drosselung der Strömung als Anteil am Druckabfall über einem Rohrabschnitt hat, zu reduzieren, um eine exaktere Messung zu ermöglichen. Im vorgeschlagenen Messprinzip wird ein gerader Rohrabschnitt so gestaltet, dass zwei Kapillaren dicht hintereinander angeordnet sind. Die erste Kapillare dient zur Ausbildung des Strömungsprofils, und damit und zur Reduktion des Druckabfalls aufgrund der Drosselung beim Einlauf in die zweite Kapillare. Die zweite Kapillare stellt eine Messkapillare dar, über die der Druckabfall gemessen wird. Der gesamte Druckabfall über dem Rohr setzt sich aus dem weitmöglichst reduzierten Anteil der Drosselung und aus dem Anteil der Reibung zusammen. Bei diesem Reibungsdruck handelt es sich um eine viskositäts-, bzw. temperaturabhängige Grösse. Die in der Dissertation vorgeschlagene Konfiguration erlaubt, den Druckanteil der Drosselung des zu messenden Fluids zu minimieren, um so im Wesentlichen nur den Reibungseffekt zu messen. Der gemessene Druckabfall ist weiterhin abhängig von der Viskosität und der Temperatur.

In der Biotechnologie werden sehr hohe Anforderungen an die Sterilität gestellt. Alle Komponenten müssen vor einem neuen Versuch bzw. Batch sterilisiert (z.B. autoklaviert) werden. Um dies zu umgehen und bei gleich hoher Qualität den Aufwand für die Reinigung und die notwendige Qualitätskontrolle zu reduzieren, wird vermehrt auf Einweg-Komponenten gesetzt (Single-Use bzw. Disposables). Diese werden steril zur Verfügung gestellt, eingebaut und anschliessend entsorgt. Präzise Dosiersysteme sind bisher nicht als Einwegkomponenten verfügbar, was ihren Einsatz als Einweg-Komponenten unwirtschaftlich macht.

### DARSTELLUNG DER ERFINDUNG

Aufgabe der Erfindung ist es einen Durchflusssensor zur Verfügung zu stellen, welcher kostengünstig hergestellt werden kann, vorzugsweise als Einweg-Produkt, und mit welchem kleine Flüssigkeitsmengen präzise gemessen werden können.

Eine andere Aufgabe der Erfindung ist es, einen Durchflusssensor zur Verfügung zu stellen, mit dem eine Durchflussrate eines Fluids ohne Kenntnis der exakten Viskosität und/oder Temperatur des Fluids gemessen werden kann, bzw. bei welchem keine vorangehende Eichung notwendig ist.

Ebenfalls eine Aufgabe der Erfindung ist es, eine Dosiervorrichtung zur Verfügung zustellen, welche als kostengünstiges Einweg-Produkt hergestellt werden kann, und mit welcher kleine Fluidmengen präzise dosiert werden können. Vorteilhaft soll eine erfindungsgemässe Dosiervorrichtung es erlauben, das Volumen eines einzelnen zudosierten Tropfens zu messen.

Es ist eine weitere Aufgabe der Erfindung, ein Verfahren zur Verfügung zu stellen, mit dem es möglich ist, einen Volumenstrom eines Fluids zu messen ohne Kenntnis der Viskosität und/oder der Temperatur des Fluids, bzw. ohne vorangehende Eichung.

Diese und andere Aufgabe werden gelöst durch einen Durchflusssensor, eine Dosiervorrichtung und ein Verfahren gemäss den unabhängigen Ansprüchen. Bevorzugte Ausführungsarten der Erfindung sind in den abhängigen Ansprüchen gegeben.

Ein erfindungsgemässer Durchflusssensor umfasst mindestens drei hintereinander angeordnete Messkammern, die jeweils durch einen Strömungswiderstand fliessend miteinander verbunden sind. Mindestens zwei der Strömungswiderstände weisen einen unterschiedlichen Druckverlustbeiwert ζ auf. Für jede Messkammer ist ein Druckmessmittel vorgesehen, welches dazu geeignet ist, den Druck p in der entsprechenden Messkammer zu messen.

Der erfindungsgemässe Durchflusssensor ist insbesondere zum einmaligen Gebrauch vorgesehen.

In einer vorteilhaften Ausführungsform eines erfindungsgemässen Durchflusssensors sind drei Messkammern seriell hintereinander angeordnet. Besonders vorteilhaft weist die mittlere der drei Messkammern ein kleineres Volumen auf als die anderen beiden Messkammern.

Aufgrund dieser Anordnung gelingt es, eine Austrittsöffnungen des ersten Strömungswiderstandes möglichst nahe an eine Eintrittsöffnung des zweiten Strömungswiderstandes heranzubringen. Der erste Strömungswiderstand beeinflusst den nachfolgenden Strömungswiderstand dahingehend, dass der austretende Fluidstrom sich in der zweiten Messkammer nicht vollständig ausbreiten und somit sein Strömungsprofil teilweise erhalten kann. Da der Fluidstrom quasi auf den zweiten Reibungskanal gerichtet ist, sinkt entsprechend Drosselungseffekt der Eintrittsöffnung, und der Druckverlustbeiwert ist geringer.

Die Strömungswiderstände sind vorteilhaft so ausgestaltet, dass sie je einen Reibungskanal mit einer bestimmten Länge L1, L2 und einer bestimmten Querschnittsfläche A1, A2 aufweisen. Die Längen L1 und L2 und/oder die Querschnittsflächen A1 und A2 der Reibungskanäle können gleich oder unterschiedlich gewählt werden. In einer vorteilhaften Ausführungsform weisen die Querschnittsflächen A1, A2 einen Wert zwischen 0,03 und 0,3 mm² auf, alternativ oder zusätzlich dazu ist die Länge L1, L2 der Reibungskanäle kleiner als 2 mm.

Um den Durchflusssensor kosteneffizient herstellen zu können, werden kostengünstige und dennoch präzise Drucksensoren benötigt. Als Druckmessmittel in einem erfindungsgemässen Durchflusssensor geeignet sind beispielsweise Halbleiterdrucksensoren, insbesondere die Drucksensoren MPX2300DT1 und MPX2301 DT1 der Fa. Freescale, Austin TX, USA (http://www.freescale.com).

Aufgrund des einfachen Aufbaus des Sensors kann der erfindungsgemässe Durchflusssensor spritzgegossen werden, vorzugsweise einstückig, und so möglichst kostengünstig hergestellt werden. Vorteilhaft wird der Durchflusssensor aus Kunststoff gefertigt.

In einer besonders vorteilhaften Ausführungsform der Erfindung weist der Durchflusssensor eine der letzten Messkammer nachgeschaltete Ventilvorrichtung auf, vorzugsweise ein elektromagnetisch betätigbares Ventil. Durch diese vorteilhafte Anordnung gelingt es, den Durchfluss eines zu dosierenden Fluids möglichst nahe am Eintritt in die Ventilvorrichtung zu messen, und gegebenenfalls die Dosiervorrichtung nachzuregeln, sollte eine vom Benutzer eingestellte Dosierrate nicht der tatsächlichen Dosierrate entsprechen.

Durch die erfindungsgemässe Anordnung des Durchflusssensors mit der Ventilvorrichtung gelingt es bei Verwendung einer geeigneten Ventilvorrichtung unter anderem auch, einzelne Tropfen des Fluids zu dosieren, und dabei das Volumen jedes einzelnen zudosierten Tropfens zu messen bzw. zu überprüfen. Diese Werte können auch aufgezeichnet werden, beispielsweise zur Qualitätskontrolle.

Eine erfindungsgemässe Dosiervorrichtung zur Dosierung von Fluiden umfasst einen Zufuhrkanal zur Zufuhr des zu dosierenden Fluids; einen erfindungsgemässen Durchflusssensor wie vorhergehend besprochen zur Bestimmung des Volumenstroms durch den Sensor, wobei der Zufuhrkanal mit der ersten Messkammer des Durchflusssensors fliessend verbunden ist; und eine Ventilvorrichtung zur Dosierung des Fluids, vorzugsweise ein elektromagnetisch betätigbares Ventil, wobei die letzte Messkammer mit dem Einlass der Ventilvorrichtung verbunden ist.

Bei einem erfindungsgemässen Verfahren zur Messung eines Volumenstroms [V/t]_{M} und/oder einer Viskosität η_{M} eines Fluids wird ein erfindungsgemässer Durchflusssensor wie vorhergehend besprochen bereitgestellt, und für mindestens zwei Strömungswiderstände des Durchflusssensors mit unterschiedlichen Druckverlustbeiwerten ζ ein Kennlinienfeld aus einer Mehrzahl von Isobaren-Kennlinien bereitgestellt, wobei die genannten Isobaren-Kennlinien Volumenstrom-Viskositäts-Wertepaare darstellen, welche bei dem entsprechenden Strömungswiderstand einen bestimmten Differenzdruck verursachen. Über den entsprechenden mindestens zwei Strömungswiderständen werden die Differenzdrücke Δp bestimmt, indem mit den Druckmessmitteln die Drücke in den entsprechenden Messkammern gemessen und daraus die Differenzdrücke berechnet werden. Den bestimmten mindestens zwei Differenzdrücken werden in den jeweiligen Kennlinienfeldern die entsprechende Isobaren-Kennlinie mit dem gleichen Differenzdruck zugeordnet, und es wird der Schnittpunkt der zugeordneten mindestens zwei Isobaren-Kennlinien bestimmt. Aus diesem bestimmten Schnittpunkt wird anschliessend der dazugehörige Volumenstrom [V/t]_{M} und/oder die dazugehörige Viskosität η_{M} bestimmt.

Gemäss Theorie beträgt der Druckabfall Δp zwischen zwei Messkammern, die durch einen Reibungskanal mir Radius r_{R} und Länge I_{R} verbunden sind: Δp = [ζρ / (π² r_{R}⁴)] [V/t]² + [8 η I_{R} / (π r_{R}⁴)] [V/t]. Der Druckverlustbeiwert ζ berücksichtigt dabei das Strömungsprofil am Einlass in den Reibungskanal. ρ ist die Dichte des Fluids. Diese dreidimensionale Funktion kann so umgeformt werden, dass mit ζ, ρ, I_{R}, r_{R} als fixen Parametern der Druckabfall Δp als dreidimensionale Funktion des Volumenstroms [V/t] und des Viskosität η dargestellt werden kann. Aus dieser Funktion können Kennlinien für ein bestimmtes Δp berechnet werden.

Anstatt die Kennlinienfelder mit mathematischen Modellen zu bestimmen, können diese auch durch numerische Simulationen erhalten werden. Ebenfalls vorteilhaft sind die experimentelle Bestimmung einer Vielzahl von Messwertetripeln, und die anschliessende numerische Interpolation einer dreidimensionalen Funktion.

Ein solches erfindungsgemässes Verfahren erlaubt es also, einen Durchfluss bzw. Volumenstrom zu bestimmen, ohne dass die Viskosität bekannt sein muss. Die Viskosität ergibt sich bei der Durchflussmessung sogar als zusätzlicher Messwert.

Bei einer vorteilhaften Variante eines solchen Verfahrens werden die Isobaren-Kennlinien der Kennlinienfelder der Strömungswiderstände aus geeigneten Kennwerten extrapoliert, vorzugsweise aus durch Messungen bestimmten Kennwerten.

Zusätzlich oder alternativ können bei einem solchen erfindungsgemässen Verfahren die Differenzdrücke in Abhängigkeit von der Zeit bestimmt werden. Dies erlaubt eine präzise Integration beispielsweise von einzelnen Tropfenvolumen.

Aufgrund der zugrundeliegenden physikalischen Effekte gelten Kennlinienfelder nur für bestimmte Fluiddichten ρ. Die Dichte des Fluids muss also bekannt sein. Die Dichte ist jedoch in der Regel bekannt, oder zumindest einfach zu bestimmen. Alternativ können auch vierdimensionale Funktionen verwendet werden, mit der Dichte als zusätzlichem Funktionsparameter. Aus diesen können dann dreidimensionale Isobaren-Kennflächen bestimmt werden. Entsprechend benötigt man dann für die eineindeutige Bestimmung des Volumenstroms (sowie der Viskosität und der Dichte) drei sich schneidende Isobaren-Kennflächen, also auch drei Strömungswiderstände mit unterschiedlichem Druckverlustbeiwert.

### KURZE ERLÄUTERUNG ZU DEN FIGUREN

Die Erfindung soll nachfolgend anhand von Ausführungsbeispielen im Zusammenhang mit den Zeichnungen näher erläutert werden.
- Figur 1: zeigt schematisch den Einsatz eines erfindungsgemässen Durchflusssensor in einem Dosiersystem.
- Figur 2: zeigt eine schematische Darstellung des erfindungsgemässen Durchflusssensors im Querschnitt.
- Figur 3: zeigt schematisch eine erfindungsgemässe Dosiervorrichtung mit einem erfindungsgemässen Durchflusssensor und einer Ventilvorrichtung.

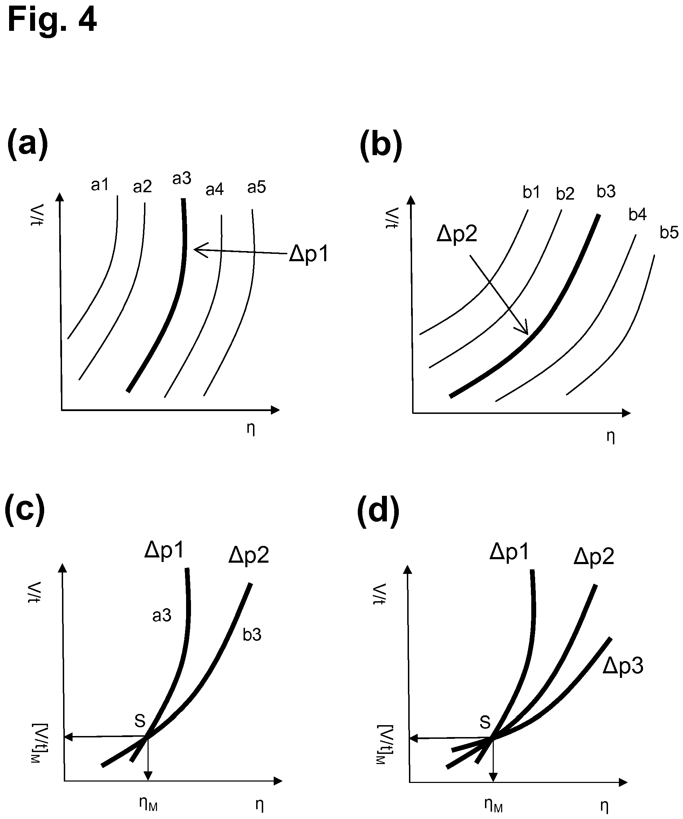

- Figur 4: zeigt schematisch (a) ein erstes Kennlinienfeld eines ersten Strömungswiderstandes, mit einer zu einer ersten gemessenen Druckdifferenz gehörenden Isobaren-Kennlinie, (b) ein zweites Kennlinienfeld eines zweiten Strömungswiderstandes, mit einer zu einer zweiten gemessenen Druckdifferenz gehörenden Isobaren-Kennlinie, (c) die Bestimmung des Schnittpunkt der ersten und der zweiten Isobaren-Kennlinie, und basierend darauf die Bestimmung des Volumenstroms und der Viskosität; und (d) die Bestimmung des Volumenstroms und der Viskosität in einer Ausführungsvariante mit drei gemessenen Druckdifferenzen und drei Isobaren-Kennlinien.

### WEGE ZUR AUSFÜHRUNG DER ERFINDUNG

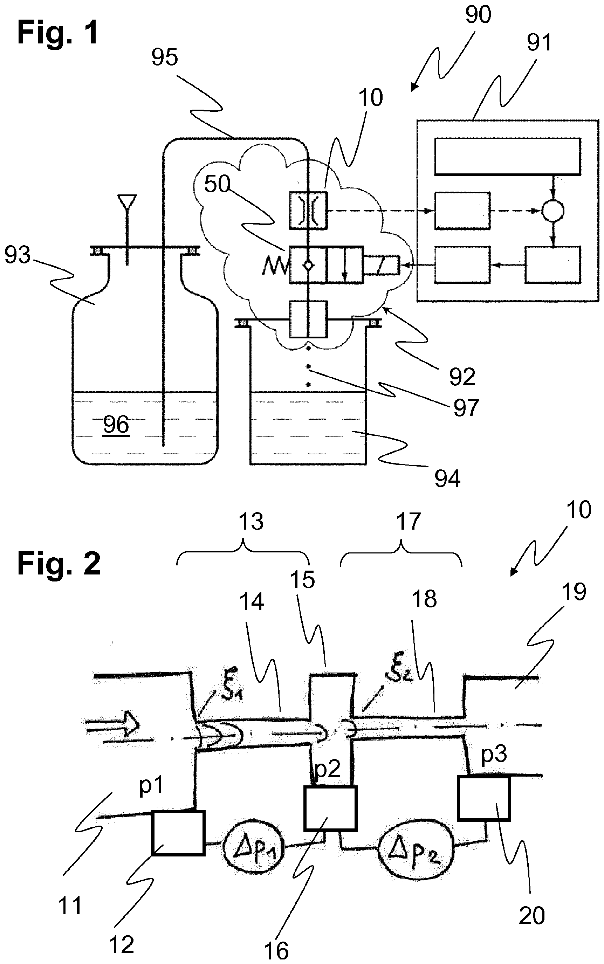

In einer bevorzugten Ausführungsform der Erfindung nach Figur 1 wird der erfindungsgemässe Durchflusssensor 10 in einem Dosiersystem 90, beispielsweise für einen Bioreaktor 94, eingesetzt. Das zu dosierende Fluid 96 wird von einem Vorratsbehälter 93 über eine Transferleitung 95 zu einer Dosiervorrichtung 92 transportiert, welche den erfindungsgemässen Durchflusssensor 10 und ein Ventilvorrichtung 50 umfasst. Mit Hilfe des Dosierventils 50 wird das zu dosierende Fluid in einzelnen Tropfen 97 dem Bioreaktor 94 zugeführt. Der Durchflusssensor 10 und das Dosierventil 50 sind vorteilhaft einstückig ausgebildet, vorzugsweise als Einweg-Einheit.

Der erfindungsgemässe Durchflusssensor 10 misst die aktuelle Dosierrate direkt am Dosierventil 50. Eine Steuerungsvorrichtung 91 steuert basierend auf einer durch den Benutzer voreingestellten Soll-Dosierrate und der zweiten durch den erfindungsgemässen Durchflusssensor 10 gemessenen Ist-Dosierrate die Öffnungszeit und/oder die Frequenz des Dosierventils 50, so dass die tatsächliche Dosierrate der gewünschten Dosierrate entspricht.

Figur 2 zeigt stark vereinfacht einen erfindungsgemässen Durchflusssensor 10 mit einer ersten Messkammer 11, einer zweiten Messkammer 15 und einer dritten Messkammer 19. Die Messkammern sind durch einen ersten Strömungswiderstand 13 und einen zweiten Strömungswiderstand 17 miteinander fliessend verbunden. In der dargestellten besonders vorteilhaften Ausführungsform werden die Strömungswiderstände 13 und 17 durch einen ersten 14 und einen zweiten 18 Reibungskanal mit einer Querschnittsfläche A1, A2 und einer Länge L1, L2 gebildet. Die Druckverlustbeiwerte ζ für die Strömungswiderstände sind unterschiedlich ausgebildet. Die zweite Messkammer 15 ist kleiner, insbesondere kürzer, ausgebildet als beispielsweise die erste Messkammer 11. Die Messkammer 15 ist dabei so gestaltet, dass eine Austrittsöffnung des ersten Reibungskanais 14 in einem geeignet kleinen Abstand zu einer Eintrittsöffnung des zweiten Strömungskanals 18 angeordnet ist. Das Strömungsprofil hat als Folge davon keine Zeit, sich gleichmässig in der Messkammer auszubreiten. Der Fluidstrom wird sozusagen auf die Eintrittsöffnung gerichtet. Als Resultat sinkt die Drosselwirkung der Eintrittsöffnung gegenüber dem theoretisch aufgrund der Geometrie zu erwartenden Wert. Dies ergibt für die beiden Strömungswiderstände 13 und 17 unterschiedliche Druckverlustbeiwerte.

Optimale Geometrien für die Messkammern und Reibungskanäle können im Abhängigkeit eines bevorzugten Bereichs der Viskosität, Dichte und Volumenstroms durch mathematische Modelle und/ oder durch numerische Simulationen bestimmt werden. Optimiert werden kann insbesondere in Hinblick auf die Genauigkeit der Bestimmung des Volumenstroms gemäss dem erfindungsgemässen Verfahren.

Pro Messkammer ist je ein Druckmessmittel 12, 16, 20 vorgesehen. In einer bevorzugten Ausführungsform handelt es sich beispielsweise um einen Einwegdrucksensor der Fa. Freescale Semiconductor, http://www.freescale.com, vom Typ MPX2300DT1 und/oder Typ MPX2301DT1. Die Differenzdrücke Δp1 und Δp2 werden bestimmt, indem aus den Druckwerten p1, p2, p3 in dem Messkammern die Differenz ermittelt wird.

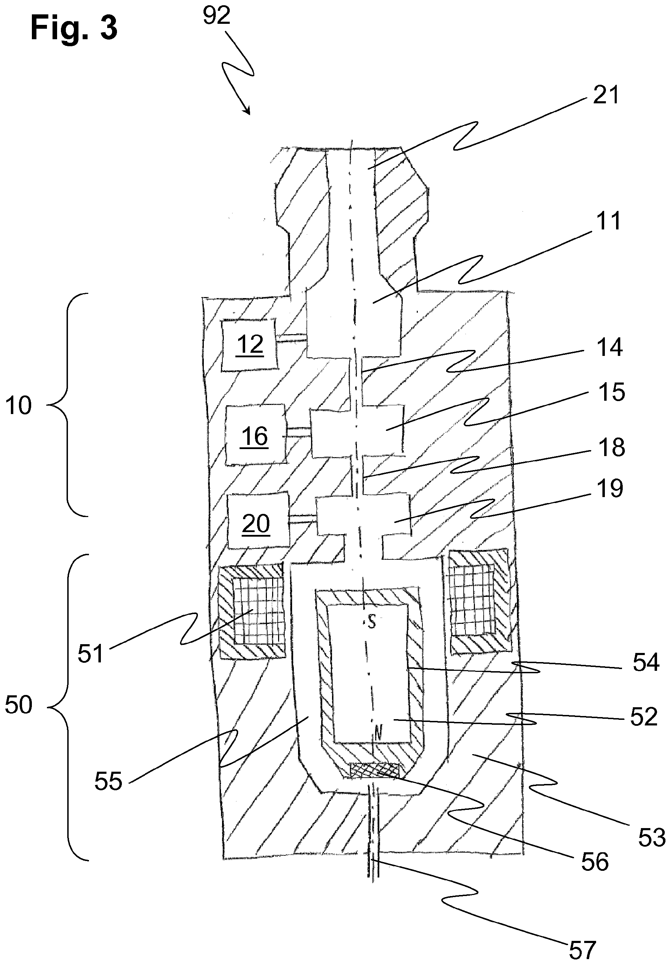

Figur 3 zeigt einen erfindungsgemässen Durchflusssensor 10 als Teil einer erfindungsgemässen Dosiervorrichtung, wobei der Durchflusssensor mit einer Ventilvorrichtung 50 fliessend verbunden ist. In der gezeigten Ausführungsform handelt es sich dabei um ein elektromagnetisch betätigbares Ventil. Bei dieser Art von Ventilen wird mit einer Magnetspule 51 ein Magnetanker 52 in einem Ventilraum 55 mit einer bestimmten Taktfrequenz verschoben, und dabei eine Austrittsöffnung 57 einer Ventildüse während einer ebenfalls bestimmbaren Dauer geöffnet und anschliessend wieder verschlossen. Auf diese Weise kann gezielt ein bestimmtes Volumen des druckbeaufschlagten Fluids in die Austrittsdüse 57 gefördert und so am Ende der Düse ein Tropfen mit einem bestimmtem Volumen abgegeben werden. Der Anker 52 des Dosierventils 50 ist vorzugsweise in einer Kapsel angeordnet, die ihn vor aggressiven Medien schützt, beispielsweise verdünnten Säuren.

Beim Durchflusssensor 10, der dem Dosierventil 50 vorgeschaltet ist, handelt es sich um den gleichen Durchflusssensor wie er in der Figur 2 beschrieben ist. In der bevorzugten Ausführungsform nach Figur 3 sind der Durchflusssensor 10 und das Dosierventil 50 einstückig ausgebildet.

Für einen ersten Strömungswiderstand wird ein Kennlinienfeld erstellt, welches den Zusammenhang zwischen Volumenstrom, Viskosität und Druckabfall über dem Strömungswiderstand darstellt. In Figur 4(a) ist ein solches Kennlinienfeld symbolisch dargestellt, mit einer Mehrzahl an Kennlinien a1 - a5, welche verschiedene Druckdifferenzen über dem Strömungswiderstand repräsentieren. Das gleiche wird für einen zweiten Strömungswiderstand gemacht (Figur 4(b)). Da dieser zweite Strömungswiderstand jedoch einen anderen Druckverlustbeiwert aufweist, sind die Kennlinien b1 bis b5 im Vergleich zu denjenigen des ersten Strömungswiderstands verkippt. Werden nun die tatsächlichen Druckdifferenzen Δp1, Δp2 experimentell bestimmt, können diesen in den jeweiligen Kennlinienfeldern die entsprechenden Kennlinien a3, b3 zugeordnet werden. Da die Viskosität des Fluids natürlich unverändert bleibt, und der Volumenstrom aufgrund des experimentellen Aufbaus ebenfalls identisch sein muss, kann dann durch Schneiden der beiden Kennlinien a3, b3 ein Wertepaar aus Volumenstrom [V/t]_{M} und Viskosität η_{M} eineindeutig bestimmt werden (Fig. 4(c)).

Figur 4(d) zeigt eine Variante, bei welcher drei Differenzdrücke über drei Strömungswiderstände mit verschiedenem Druckverlustbeiwert ζ gemessen werden, und entsprechend drei Kennlinien geschnitten werden. Die zusätzliche Messung erhöht die Messgenauigkeit.

### BEZUGSZEICHENLISTE

- 10: Durchflusssensor
- 11: erste Messkammer
- 12: erstes Druckmessmittel
- 13: erster Strömungswiderstand
- 14: erster Reibungskanal
- 15: zweite Messkammer
- 16: zweites Druckmessmittel
- 17: zweiter Strömungswiderstand
- 18: zweiter Reibungskanal
- 19: dritte Messkammer
- 20: drittes Druckmessmittel
- 21: Zufuhrkanal
- 50: Ventilvorrichtung, Dosierventil
- 51: Magnetspule
- 52: Magnetanker
- 53: Ventilsitz
- 54: Ventilteil
- 55: Ventilraum
- 56: Dichtungselement
- 57: Austrittsdüse
- 90: Dosiersystem
- 91: Steuerungsvorrichtung
- 92: Dosiervorrichtung
- 93: Vorratsbehälter
- 94: Bioreaktor
- 95: Transferleitung
- 96: Fluid
- 97: Tropfen, zudosiertes Volumen
- Δp1, Δp2, Δp3: Differenzdruck
- p1, p2, p3: Druck in Messkammer
- ζ1, ζ2: Druckverlustbeiwerte
- al...a5, b1-b5: Isobaren-Kennlinien
- S: Schnittpunkt

## Patentansprüche

1. Durchflusssensor (10), insbesondere zum einmaligen Gebrauch, mit mindestens drei hintereinander angeordneten Messkammern (11, 15, 19), die jeweils durch einen Strömungswiderstand (13, 17) fliessend miteinander verbunden sind, wobei für jede Messkammer ein Druckmessmittel (12, 16, 20) vorgesehen ist, welches dazu geeignet ist, den Druck (p1, p2, p3) in der entsprechenden Messkammer zu messen. **dadurch gekennzeichnet, dass** mindestens zwei der Strömungswiderstände einen unterschiedlichen Druckverlustbeiwert (ζ1, ζ2) aufweisen,

2. Durchflusssensor nach Anspruch 1, **gekennzeichnet durch** seriell drei hintereinander angeordnete Messkammern (11, 15, 19).

3. Durchflusssensor nach Anspruch 1 oder 2, **dadurch gekennzeichnet, dass** die Strömungswiderstände (13, 17) je einen Reibungskanal (14, 18) mit einer bestimmten Länge (L1, L2) und einer bestimmten Querschnittsfläche (A1, A2) aufweisen.

4. Durchflusssensor nach Anspruch 3, **dadurch gekennzeichnet, dass** die Querschnittsflächen (A1, A2) der Reibungskanäle (14, 18) einen Wert zwischen 0,03 und 0,3 mm² aufweisen.

5. Durchflusssensor nach Anspruch 3 oder 4, **dadurch gekennzeichnet, dass** die Länge (L1, L2) der Reibungskanäle (14, 18) kleiner als 2 mm ist.

6. Durchflusssensor nach einem der vorangegangenen Ansprüche, **dadurch gekennzeichnet, dass** es sich bei den Druckmessmitteln (12, 16, 20) um Halbleiterdrucksensoren handelt.

7. Durchflusssensor nach einem der vorangegangenen Ansprüche, **dadurch gekennzeichnet, dass** der Durchflusssensor (20) aus Kunststoff gefertigt und/oder spritzgegossen ist.

8. Durchflusssensor nach einem der vorangegangenen Ansprüche, **gekennzeichnet durch** eine der letzten Messkammer (19) nachgeschaltete Ventilvorrichtung (50), vorzugsweise ein elektromagnetisch betätigbares Ventil.

9. Dosiervorrichtung (92) zur Dosierung von Fluiden, umfassend einen Zufuhrkanal (21) zur Zufuhr des zu dosierenden Fluids; einen Durchflusssensor (10) nach einem der Ansprüche 1 bis 8, zur Bestimmung des Volumenstroms durch den Sensor, wobei der Zufuhrkanal mit der ersten Messkammer (11) des Durchflusssensors fliessend verbunden ist; und eine Ventilvorrichtung (50) zur Dosierung des Fluids, vorzugsweise ein elektromagnetisch betätigbares Ventil, wobei die letzte Messkammer (19) mit dem Einlass der Ventilvorrichtung verbunden ist.

10. Verfahren zur Messung eines Volumenstroms ([V/t]_{M}) und/oder einer Viskosität (η_{M}) eines Fluids, wobei
- ein Durchflusssensor (10) nach einem der Ansprüche 1 bis 8 bereit gestellt wird;
- für mindestens zwei Strömungswiderstände (13, 17) des Durchflusssensors mit unterschiedlichen Druckverlustbeiwerten (ζ1, ζ2) ein Kennlinienfeld aus einer Mehrzahl von Isobaren-Kennlinien (a1...a5, b1...b5) bereitgestellt wird, wobei die genannten Isobaren-Kennlinien Volumenstrom-Viskositäts-Wertepaare darstellen, welche bei dem entsprechenden Strömungswiderstand einen bestimmten Differenzdruck verursachen;
- die Differenzdrücke (Δp1, Δp2) über den entsprechenden mindestens zwei Strömungswiderständen bestimmt werden, indem mit den Druckmessmitteln (12, 16, 20) die Drücke (p1, p2, p3) in den entsprechenden Messkammern (11, 15, 19) gemessen und daraus die Differenzdrücke berechnet werden;
- den bestimmten mindestens zwei Differenzdrücken in den jeweiligen Kennlinienfeldern die entsprechende Isobaren-Kennlinie (a3, b3) mit dem gleichen Differenzdruck zugeordnet wird;
- der Schnittpunkt (S) der zugeordneten mindestens zwei Isobaren-Kennlinien bestimmt wird;
- aus dem bestimmten Schnittpunkt der dazugehörige Volumenstrom ([V/t]_{M}) und/oder die dazugehörige Viskosität (η_{M}) bestimmt wird.

11. Verfahren nach Anspruch 10, **dadurch gekennzeichnet, dass** die Isobaren-Kennlinien der Kennlinienfelder der Strömungswiderstände aus geeigneten Kennwerten extrapoliert werden, vorzugsweise aus durch Messungen bestimmten Kennwerten.

12. Verfahren nach Anspruch 10 oder 11, **dadurch gekennzeichnet, dass** die Differenzdrücke (Δp1, Δp2) in Abhängigkeit von der Zeit (t) bestimmt werden.

## Claims

1. Flow sensor (10), particularly for one-time use, having at least three measuring chambers (11, 15, 19), which are arranged one behind the other, and which are each flowingly connected to one another by a flow resistor (13, 17), wherein for each measuring chamber, a pressure measuring means (12, 16, 20) is provided which is suitable for measuring the pressure (p1, p2, p3) in the corresponding measuring chamber, **characterized in that** at least two of the flow resistors have a different pressure loss coefficient (ζ1, ζ2).

2. Flow sensor according to claim 1, **characterized by** measuring chambers (11, 15, 19) which are connected in series one behind the other.

3. Flow sensor according to claim 1 or 2, **characterized in that** the flow resistors (13, 17) each comprise a friction channel (14, 18) with a specific length (L1, L2) and a specific cross-section surface (A1, A2).

4. Flow sensor according to claim 3, **characterized in that** the cross-section surfaces (A1, A2) of the friction channels (14, 18) have a value between 0.03 and 0.3 mm².

5. Flow sensor according to claim 3 or 4, **characterized in that** the length (L1, L2) of the friction channels (14, 18) is less than 2 mm.

6. Flow sensor according to one of the previous claims, **characterized in that** the pressure measuring means (12, 16, 20) are semiconductor pressure sensors.

7. Flow sensor according to one of the previous claims, **characterized in that** the flow sensor (20) is made of plastic and/or is injection molded.

8. Flow sensor according to one of the previous claims, **characterized by** a valve device (50), preferably an electromagnetically operable valve, which is located downstream of the last measuring chamber (19).

9. Metering device (92) for metering fluids, comprising a feed channel (21) for feeding the fluid to be metered; a flow sensor (10) according to one of the claims 1 to 8 for determining the volume flow through the sensor, wherein the feed channel is flowingly connected to the first measuring chamber (11) of the flow sensor; and a valve device (50) for metering the fluid, preferably an electromagnetically operable valve, wherein the last measuring chamber (19) is connected to the inlet of the valve device.

10. Method for measuring a volume flow ([V/t]_{M}) and/or a viscosity (η_{M}) of a fluid, wherein
- a flow sensor (10) according to one of the claims 1 to 8 is provided;
- a characteristics map from a multiplicity of isobars characteristics (a1...a5, b1...b5) is provided for at least two flow resistors (13, 17) of the flow sensor with different pressure loss coefficients (ζ1, ζ2), wherein said isobars characteristics represent volume flow viscosity value pairs which cause a specific differential pressure at the corresponding flow resistor;
- the differential pressures (Δp1, Δp2) are determined by means of the corresponding at least two flow resistors by measuring the pressures (p1, p2, p3) in the corresponding measuring chambers (11, 15, 19) with the pressure measuring means (12, 16, 20) and calculating the differential pressures therefrom;
- the corresponding isobars characteristic (a3, b3) with the same differential pressure is associated with the specific at least two differential pressures in the corresponding characteristics maps;
- the intercept point (S) of the associated at least two isobars characteristics is determined;
- the corresponding volume flow ([V/t]_{M}) and/or the corresponding viscosity (η_{M}) is determined from the determined intercept point.

11. Method according to claim 10, **characterized in that** the isobars characteristics of the characteristics maps of the flow resistors are extrapolated from suitable characteristic values, preferably from characteristic values determined by measurements.

12. Method according to claim 10 or 11, **characterized in that** the differential pressures (Δp1, Δp2) are determined on the basis of the time (t).

## Revendications

1. Débitmètre (10), en particulier pour usage unique, comprenant au moins trois chambres de mesure (11, 15, 19) agencés l'une derrière l'autre, qui sont respectivement raccordées l'une à l'autre en mode fluidique par une résistance hydraulique (13, 17), dans lequel il est prévu pour chaque chambre de mesure un moyen de mesure de pression (12, 16, 20), qui convient pour mesurer la pression (p1, p2, p3) dans la chambre de mesure correspondante, **caractérisé en ce qu'**au moins deux des résistances hydrauliques présentent un facteur de correction de perte de pression différent (ζ1, ζ2).

2. Débitmètre selon la revendication 1, **caractérisé par** trois chambres de mesure (11, 15, 19) agencées en série l'une derrière l'autre.

3. Débitmètre selon la revendication 1 ou 2, **caractérisé en ce que** les résistances hydrauliques (13, 17) présentent respectivement un canal de friction (14, 18) d'une longueur déterminée (L1, L2) et d'une surface en coupe transversale déterminée (A1, A2).

4. Débitmètre selon la revendication 3, **caractérisé en ce que** les surfaces en coupe transversale (A1, A2) des canaux de friction (14, 18) présentent une valeur comprise entre 0,03 et 0,3 mm².

5. Débitmètre selon la revendication 3 ou 4, **caractérisé en ce que** la longueur (L1, L2) des canaux de friction (14, 18) est inférieure à 2 mm.

6. Débitmètre selon l'une quelconque des revendications précédentes, **caractérisé en ce que** les moyens de mesure de pression (12, 16, 20) sont des capteurs de pression à semi-conducteurs.

7. Débitmètre selon l'une quelconque des revendications précédentes, **caractérisé en ce que** le débitmètre (20) est constitué d'une matière plastique et/ou est moulé par injection.

8. Débitmètre selon l'une quelconque des revendications précédentes, **caractérisé par** un dispositif à soupape (50) monté en aval de la dernière chambre de mesure (19), de préférence une soupape à commande électromagnétique.

9. Dispositif de dosage (92) pour doser des fluides, comprenant un canal d'alimentation (21) pour acheminer le fluide à doser ; un débitmètre (10) selon l'une quelconque des revendications 1 à 8 pour déterminer le courant volumique à travers le débitmètre, dans lequel le canal d'alimentation est raccordé en mode fluidique à la première chambre de mesure (11) du débitmètre ; et un dispositif à soupape (50) pour doser le fluide, de préférence une soupape à commande électromagnétique, dans lequel la dernière chambre de mesure (19) est raccordée à l'entrée du dispositif à soupape.

10. Procédé de mesure d'un courant volumique ([V/t]_{M}) et/ou d'une viscosité (η_{M}) d'un fluide, dans lequel :
- un débitmètre (10) selon l'une quelconque des revendications 1 à 8 est mis en oeuvre ;
- pour au moins deux résistances hydrauliques (13, 17) du débitmètre avec des facteurs de correction de perte de pression différents (ζ1, ζ2), on met en oeuvre un champ de caractéristiques formé d'une pluralité de caractéristiques isobares (a1...a5, b1...b5), dans lequel les caractéristiques isobares mentionnées représentent des paires de valeurs de courant volumique et de viscosité qui provoquent une pression différentielle déterminée dans le cadre de la résistance hydraulique correspondante ;
- les pressions différentielles (Δp1, Δp2) sont déterminées via les au moins deux résistances hydrauliques correspondantes en mesurant avec les moyens de mesure de pression (12, 16, 20) les pressions (p1, p2, p3) dans les chambres de mesure correspondantes (11, 15, 19) et en en tirant les pressions différentielles par calcul ;
- la caractéristique isobare correspondante (a3, b3) est affectée avec la même pression différentielle aux au moins deux pressions différentielles déterminées dans les champs de caractéristiques respectifs ;
- on détermine le point d'intersection (S) des au moins deux caractéristiques isobares affectées ;
- on détermine à partir du point d'intersection déterminé le courant volumique connexe ([V/t]_{M}) et/ou la viscosité connexe (η_{M}).

11. Procédé selon la revendication 10, **caractérisé en ce que** les caractéristiques isobares des champs de caractéristiques des résistances hydrauliques sont extrapolées à partir de valeurs caractéristiques appropriées, de préférence à partir de valeurs caractéristiques déterminées par des mesures.

12. Procédé selon la revendication 10 ou 11, **caractérisé en ce que** les pressions différentielles (Δp1, Δp2) sont déterminées en fonction du temps (t).
